# EUROPÄISCHE PATENTANMELDUNG

(11) **EP 0 999 186 A2**
(43) Veröffentlichungstag der Anmeldung: **10.05.2000**
(21) Anmeldenummer: 99890352.0
(22) Anmeldetag: 03.11.1999
(51) Int. Cl.: C02F 3/00, C02F 3/06, C02F 1/28, C02F 1/52, C02F 1/24, C02F 3/30, C02F 1/44, C02F 3/28

(54) **Verfahren zum Reinigen und Aufbereiten von beim Reinigen von Strassentank- und Strassensilofahrzeugen, Eisenbahnkessel-waggons und Tankschriffen anfallenden Flüssigkeiten**

(30) Priorität: 03.11.1998 AT 182398
(71) Anmelder: Lutz, Willibald, Dipl. Ing. Dr., 1210 Wien (AT); Lux, Christian, 3443 Rappoltkirchen (AT)
(72) Erfinder: Lutz, Willibald, Dipl. Ing. Dr., 1210 Wien (AT); Lux, Christian, 3443 Rappoltkirchen (AT)
(74) Vertreter: Beer, Manfred, Dipl.-Ing.

(57) **Zusammenfassung**

Ein Verfahren zum Reinigen und Aufbereiten von Flüssigkeiten, die bei der Innenreinigung von Straßentank- und Straßensilofahrzeugen, Eisenbahnkesselwaggons und Tankschiffen anfallen, umfaßt das Erfassen der Waschflüssigkeiten am Ort des Anfalls nach Produktgruppen.

Die Waschflüssigkeiten werden nach Passieren von Vorreinigungseinrichtungen wie Sieben, Fettabscheidern, Mineralölabscheidern und Mischbehältern einem gemeinsamen Homogenisierungsbecken zugeführt, wobei die Verweilzeit im Homogenisierungsbecken vorzugsweise einen Tag beträgt.

Die Behandlung der Waschflüssigkeiten erfolgt kontinuierlich in einer Reinigungskette umfassend eine biologische Reinigung, Membranfiltration und Aktivkohleadsorption. Durch diese Behandlungskette werden die Waschwässer weitestgehend gereinigt, sodaß sie entweder in den Waschkreislauf zurückgeführt oder direkt in ein Fließgewässer (Vorfluter) eingeleitet werden können.

## Beschreibung

Die Erfindung betrifft ein Verfahren zum Innenreinigen von Straßentank- und Straßensilofahrzeugen, Eisenbahnkesselwaggons und Tankschiffen durch Flüssigkeiten sowie zum Aufbereiten der beim Innenreinigen an Waschplätzen anfallenden Reinigungsflüssigkeiten der Produktgruppen zu Recyclingzwecken oder zur Ableitung in eine Kanalisation oder Direkteinleitung in einen Vorfluter.

Aus der AT 69064 B ist eine Vorrichtung zum Reinigen von Abwasser mit in der Strömungsrichtung des Wasser hintereinanderliegenden Absitztrögen und gegen diese dicht abschließbaren Abführrinnen unter den Absitztrögen bekannt. Die Abführrinnen besitzen gegen das Wasser abgeschlossene, absperrbare Auslässe für Schlamm und sind mit einer absperrbaren Wasserleitung versehen, so daß nach dem Ablassen des Schlammes die leeren Abführrinnen vollständig abgeschlossen und vor ihrer Wiederverbindung mit den Absitztrögen gefüllt werden können. Durch diese Vorrichtung kann Schlamm aus den Abführrinnen der einzelnen Absitztröge in einem unter der Abführrinne befindlichen Schlammfaulraum befördert werden. Außer den nach den Schlammfaulräumen führenden absperrbaren Auslässen besitzen die Schlammrinnen noch weitere absperrbare Auslässe, über welche Schlamm auf Trockenbeete verteilt werden kann.

Aus der AT 209826 B ist eine Kläranlage, insbesondere für Abwasser, mit einer zylindrischen Außenwand und Innenwänden bekannt, die in Verbindung mit einem Boden einzelne, von der zur reinigenden Flüssigkeit durchflossene Kammern bilden. Die mit Öffnungen für den Durchtritt der Flüssigkeit versehenen Innenwände sind zumindest annähernd parallel zueinander angeordnet, wobei die Öffnungen in den Innenwänden derart versetzt zueinander liegen, daß die zu reinigende Flüssigkeit auf ihrem Weg von der Eintrittsstelle zu der Austrittsstelle gezwungen ist, die von den Innenwänden begrenzten Kammern nacheinander kontinuierlich über ihre ganze Länge zu durchströmen. Durch die Gestaltung der Kläranlage verbreitert sich der Querschnitt der ersten, im Grundriß kreissegmentförmigen Kammer in Strömungsrichtung. Die dadurch bedingte Verringerung der Strömungsgeschwindigkeit begünstigt das Absinken größerer Schwebstoffe. In von parallelen Wänden begrenzten, anschließend von der Flüssigkeit durchflossenen Kammern, erfolgt bei vorteilhafter Ausnützung des vorhandenen Klärraumes eine weitgehende Reinigung der Flüssigkeit von noch vorhandenen feinen Schwebstoffen. In diesen Kammern ist die Wasserbewegung laminar und ohne Wirbelbildung. Es gibt keine Toträume und der Durchflußweg erreicht ein Maximum. In der letzten Kammer mit einer Austrittsöffnung, welche im Grundriß eine Kreissegmentform aufweist, sinken allenfalls noch mitgeführte Schwebstoffe zu Boden, zumal in der letzten Kammer eine Verlangsamung der Strömung auftritt. Diese bekannte Anlage ist lediglich eine Kläranlage zur mechanischen Abscheidung von Schwebstoffen in speziell geformten Kammern.

Die AT 380464 B betrifft eine Anlage zum Reinigen von Tankfahrzeugen mittels Lösungsflüssigkeiten, welche Flüssigkeiten anschließend geklärt werden. In dieser bekannten Anlage sind mindestens drei voneinander getrennte Hauptbecken vorgesehen, wobei einem ersten Hauptbecken, das zur Aufnahme der Abwässer von der Reinigung von Emulsionen, Formaldehyd, Salmiak, Phenol, Phenolharzen, Latex, Leimen, Dispersionen, flüssigen Kunststoffen und dergleichen dient, ein Entspannungsgefäß zugeordnet ist, durch das Dämpfe abführbar sind. In einem zweiten Hauptbecken, das zur Aufnahme der Abwässer nach der Reinigung von Lebensmitteln, wie Ölen, Fette, Melasse, Zucker, Futtermitteln, Fruchtsäften und in einem dritten Hauptbekken, das zur Aufnahme der Abwässer nach der Reinigung von Mineralölen und Mineralölderivaten dient, sind Kühleinrichtungen und Austragseinrichtungen für Fette angeordnet.

Die aus der AT 380 464 B bekannte Anlage besitzt ein viertes Hauptbecken, das zur Aufnahme von Abwässern nach der Reinigung von Säuren und Laugen dient. Schließlich ist ein fünftes Becken vorgesehen, das zur Aufnahme der Abwässer nach der Reinigung von Lösungsmitteln wie Azeton, Ethylenazetat usw. dient.

Im weiteren erfolgt bei der aus der AT 380 464 B bekannten Anlage die Abwasserbehandlung dadurch, daß dem ersten Hauptbecken Düsen zugeordnet sind, durch die in die im Becken enthaltene Flüssigkeit Luft eingeleitet wird. Dem ersten Hauptbecken ist ein Becken zur Spaltung von Emulsionen mit einem Rührwerk nachgeschaltet. Den ersten zwei Hauptbecken sowie dem gegebenenfalls vorgesehenen vierten Hauptbecken sind weitere Becken zur Neutralisation, Ausflockung und Behandlung mittels Plattenabscheidern sowie mit Aktivkohleelementen nachgeschaltet. Dem ersten Hauptbecken ist eine Konditionieranlage für Phenol, Phenolharze, Xylenol und dergleichen vorgeschaltet. Dem zweiten und dritten Hauptbecken ist ein Fettabscheider nachgeordnet. Die bekannte Anlage soll die Abwässer soweit klären, daß diese in ein Kanalnetz abgegeben werden können.

Die EP 0 504 019 A1 betrifft ein Verfahren zur biologischen Reinigung von Wasser durch Nitrifikation und Denitrifikation.

Bei dem in der EP 0 504 019 A1 beschriebenen Verfahren, wird das zu reinigende Wasser in einen ersten Reaktor von unten her eingeleitet und dort unter anoxischen Bedingungen behandelt, um im zu reinigenden Wasser enthaltenen Stickstoff (vornehmlich in Form von Ammoniak) in Nitrate umzuwandeln. Aus dem ersten Reaktor wird das so vorbehandelte, nitrifizierte Wasser über eine Leitung in einen zweiten Reaktor eingeleitet, in dem unter Sauerstoffzufuhr eine Denitrifikation ausgeführt wird, um Nitrate abzubauen.

In der EP 0 504 019 A1 ist auch ein Hinweis darauf enthalten, daß behandeltes Wasser vorher zu behandeln ist, indem es gefiltert und durch eine Ölabscheidestufe geführt wird. Des weiteren ist in der EP 0 504 019 A1 der Vorschlag enthalten, dem zu behandelnden Wasser Hilfsstoffe wie Kalk, Flockungsmittel, Eisen(III)chlorid oder bestimmte Polymere zuzusetzen.

Die EP 0 504 019 A1 beschreibt somit insgesamt eine eher übliche Aufbereitung von Wasser durch Nitrifikation und anschließende Denitrifikation. In der EP 0 504 019 A1 ist kein Hinweis darauf enthalten, beim Innenreinigen von Straßentank- und Straßensilofahrzeugen, Eisenbahnkesselwaggons und Tankschiffen anfallende Flüssigkeiten von einzelnen Waschplätzen, die jeweils speziellen zu reinigenden Produktgruppen zugeordnet sind, einen gemeinsamen Homogenisierungsbecken zuzuführen und die im Homogenisierungsbecken vereinigten Waschflüssigkeiten einer physikalischen und biologischen Kläranlage zwecks Reinigung zuzuführen.

Die DE 29 00 930 A1 betrifft ein Verfahren zur Behandlung von Jauche mit hohem Gehalt an flüssigem Material.

Bei dem in der DE 29 00 930 A1 beschriebenen Verfahren wird der Jauche ein Flockungsmittel und ein Koagulationsmittel zugefügt, die Mischung für eine Reaktion zwischen Jauche und Flockungsmittel und Koagulationsmittel gerührt bzw. bewegt, die Mischung abklären lassen, wonach die Festteilchen abgetrennt werden und eine flüssige Phase erhalten wird, die im wesentlichen aus Wasser besteht, das einen biochemischen Sauerstoffbedarf unter 4.000 mg/l aufweist, wenn die behandelte Jauche eine solche aus Schweineställen ist, während man den vorgenannten Arbeitsgängen eine aerobe Stabilisierung der Schlammstoffe vorausgehen läßt, wobei man eine flüssige Phase erhält, die einen biochemischen Sauerstoffbedarf unter 500 mg/l aufweist.

In der DE 29 00 930 A1 ist auch der Hinweis enthalten, daß das Wasser nach einer biologischen Klärbehandlung einen biochemischen Sauerstoffbedarf unterhalb von 100 mg/l aufweist. In der DE 29 00 930 A1 wird weiters darauf hingewiesen, daß als Koagulationsmittel Aluminiumchlorid, Aluminiumsulfat und Eisenchlorid sowie als Flokkungsmittel ein kationischer Polyelektrolyt verwendet wird.

Des weiteren ist in der DE 29 00 930 A1 der Vorschlag enthalten, daß die Feststoffe einer Verpressung und/oder Granulierung unterzogen werden und danach als Bodenverbesserungs- und/oder Düngemittel verwendet werden können.

Die DE 29 00 930 A1 beschreibt somit insgesamt eine übliche Aufbereitung von Jauche bzw. Gülle durch Flockung und Koagulation mit anschließender Schlammabtrennung und biologischer Behandlung der Wasserphase.

Die DE 42 37 387 A1 betrifft ein Verfahren und eine Vorrichtung zur separaten biologischen Stickstoffelimination aus Trübwasser.

Bei dem in der DE 42 37 387 A1 beschriebenen Verfahren wird das Trübwasser in einem Abstromfließbettreaktor nitrifiziert, dessen Fließbett über die Reaktorhöhe verteilt an mehreren Stellen Sauerstoff zugeführt wird. Das aus dem Abstromfließbettreaktor austretende Trübwasser wird dann einer Denitrifikationsstufe zugeführt. Bei Verlassen der Denitrifikationsstufe ist der Stickstoff weitgehend aus dem Trübwasser eliminiert.

In der DE 42 37 387 A1 ist der Vorschlag enthalten, den Sauerstoff in Form angereicherter Luft oder als technisch reiner Sauerstoff in den Abstromfließbettreaktor einzutragen sowie in der Denitrifikationsstufe als Kohlenstoffquelle eine synthetische Kohlenstoffverbindung einzubringen.

Die DE 42 37 387 A1 beschreibt somit ein Verfahren und eine Vorrichtung zur Stickstoffeliminierung aus Trübwässern (Zentratwasser, Rejektwasser) aus der Schlammbehandlung kommunaler Kläranlagen mit Ammoniumstickstoff in Konzentrationen bis über 1.000 mg/l. In der DE 42 37 387 A1 ist kein Hinweis darauf enthalten, die beim Innenreinigen von Straßentank- und Straßensilofahrzeugen, Eisenbahnkesselwaggons und Tankschiffen anfallende Flüssigkeiten von einzelnen Waschplätzen, gemeinsam zu behandeln.

Die DE 41 27 975 A1 betrifft ein Verfahren und eine Anlage zur Reinigung von Transportbehältnissen für Abfälle.

Bei dem in der DE 41 27 975 A1 beschriebenen Verfahren werden die Transportbehälter in aufeinanderfolgenden Reinigungsstufen (Vorreinigung trocken, Hauptreinigung naß, Endreinigung naß) nur soweit gereinigt, daß sie wieder zum Transport von Abfällen der gleichen Kategorie einsetzbar sind und daß die Reinigung wenigstens teilweise mit rückgeführtem Abwasseranteil durchgeführt wird, wobei eine Vermischung unterschiedlicher Abfälle untereinander vermieden wird. In der DE 41 27 975 A1 ist ein Hinweis darauf enthalten, daß das Waschwasser aus der Endreinigungsstufe in Waschwasser mit halogenhaltigen Verunreinigungen, mit halogenfreien, lösemittelhaltigen Verunreinigungen und in ölhaltiges Waschwasser auch mit Emulsionsanteilen getrennt wird. Weiters ist in der DE 41 27 975 A1 der Vorschlag enthalten, das ölhaltige Waschwasser einer Ölabscheidung und einer Emulsionsspaltanlage, z.B. einer Druckentspannungsflotation zu unterwerfen.

In der DE 41 27 975 A1 ist auch ein Hinweis darauf enthalten, daß die Waschwassersorten der Endreinigungsstufe zur Verringerung des Halogenanteils über eine Strippanlage geführt werden, wobei die mit Lösungsmitteln beladene Luft einer Abluftreinigungsanlage zugeührt wird. Des weiteren ist in der DE 41 27 975 A1 der Vorschlag enthalten, daß die Waschwasserversorgungs- und -aufbereitungsanlage einen Vorreinigungskreislauf, einen Endreinigungskreislauf und einen Außenreinigungskreislauf 54 aufweist.

Die DE 41 27 975 A1 beschreibt somit insgesamt eine Aufbereitung von Abwässern zur Reinigung von Transportbehältnissen für flüssige Abfälle mit unterschiedlichen chemisch-physikalischen Methoden, wobei eine Vermischung unterschiedlicher Abfälle und damit auch Waschwässern vermieden wird. In der DE 41 27 975 A1 ist kein Hinweis darauf enthalten, daß die beim Reinigen von Behältnissen anfallenden Abwässer einem gemeinsamen Homogenisierungsbecken zugeführt werden und die im Homogenisierungsbecken vereinigten Waschflüssigkeiten einer physikalischen und biologischen Kläranlage zwecks Reinigung zugeführt werden. Des weiteren enthält die DE 41 27 975 A1 keinen Hinweis darauf, daß das Waschwasser der Endreinigungsstufe nach mehrmaliger Kreislaufführung eine "Einleitqualität" aufweist.

Die US 5 171 453 A betrifft ein Verfahren, nach welchem wässrige Medien, wie z.B. Oberflächen- oder Abwässer, oder Industrieabwässer gereinigt werden und die Restinhalte des verbliebenen Aluminiums und organische Feststoffe reduziert werden durch Behandlung derselben mit einer effizienten verunreinigungskoagulierenden Menge von mindestens einem Aluminiumpolymer und einem Eisensalz. Bei dem in der US 5 171 453 A beschriebenen Verfahren werden die organischen Verunreinigungen durch die Zugabe von Aluminiumpolymer, das ein Aluminiumpolysulfat, Aluminiumpolychlorid, basisches Aluminiumpolychlorid oder ein basisches Aluminiumpolychlorsulfat und mindestens ein Eisensalz miteinschließt, aus den Abwässern entfernt, wobei das Eisensalz zu einem verzögerten Zeitpunkt hinzugefügt wird.

Die US 5 171 453 A beschreibt somit ein Verfahren zur Entfernung von organischen Verunreinigungen durch Flockungs- und Flockungshilfsmittel ohne weitere Behandlung. In der US 5 171 453 A ist kein Hinweis darauf enthalten, die beim Innenreinigen von Straßentank- und Straßensilofahrzeugen, Eisenbahnkesselwaggons und Tankschiffen anfallenden Flüssigkeiten von einzelnen Waschplätzen gemeinsam zu behandeln.

Die US 4 676 908 A betrifft ein Verfahren, in welchem Abwasserströme aus der Dampfextraktion von Schwerölen behandelt werden, um organische Verunreinigungen, suspendierte Feststoffe und mineralische Verunreinigungen zu entfernen. Dabei soll ein gereinigter Wasserstrom erzeugt werden, der in der Dampfproduktion wieder verwendet werden kann. Suspendierte Feststoffe werden durch Koagulation, Flockulation und Flotation entfernt, organische Verunreinigungen durch Aktivkohleadsorption und mineralische Verunreinigungen durch Elektrodialyse oder Umkehrosmose und Ionentauscher. Die thermische Wirtschaftlichkeit wird auch erzielt, indem der gereinigte Wasserstrom im Wärmetauscher mit dem Abwasserstrom nach Entfernung der suspendierten Feststoffe geleitet wird.

Bei dem in der US 4 676 908 A beschriebenen Verfahren entsteht Abwasser in der Dampfextraktion von Schwerölen aus unterirdischen Depots, welches zunächst belüftet wird, um das Oxidations-Reduktionspotential zu verringern und um die Sulfid- und Phenolkonzentrationen zu reduzieren, wobei Koagulierungs- und Flockulierungsmittel (Aluminium) dem Abwasserstrom zugesetzt werden. Anschließend erfolgt in der Aktivkohle die Entfernung von gelösten organischen stofflichen Verunreinigungen und danach werden in der Elektrodialyse oder Umkehrosmose die gelösten mineralischen Verunreinigungen und danach mittels Ionenaustausch alle restlichen gelösten mineralischen Verunreinigungen samt Kieselerde entfernt.

Die US 4 676 908 A beschreibt somit ein Verfahren zur Reinigung von Abwässern aus der Dampfextraktion von Schwerölen, um danach das gereinigte Wasser als Kesselspeisewasser wieder einzusetzen. In der US 4 676 908 A ist kein Hinweis darauf enthalten, daß die beim Innenreinigen von Transportbehältnissen anfallenden Abwässer behandelt und als Waschwasser rezykliert werden.

Die US 4 156 648 A beschreibt eine Methode und eine Vorrichtung zur Behandlung von Wasser und Abwasser, um Sand, suspendierte und kolloidale Feststoffe organischer und anorganischer Natur und Mikroorganismen zu entfernen. Schwere suspendierte Feststoffe (Sand) werden zunächst in einem Zentrifugierverfahren entfernt. Das Abwasser wird dann durch Koagulier- und Flockungsbecken geleitet, in einen Aufstromklärer geführt, und zur Sedimentation in ein Hochleistungsabsetzbecken geleitet. Danach wird das Abwasser in einen Flotationsfilter zur Entfernung von kolloidalen Partikeln geleitet. Das Wasser oder Abwasser wird mit Luft gesättigt und in der Folge entlüftet, so daß das gelöste Gas gemeinsam mit den suspendierten Verunreinigungen austritt. An dieser Stelle wird Ozon in das Abwasser geführt, um einen stärkeren und dichteren Schaum zu erzeugen und gleichzeitig organische Verunreinigungen zu oxydieren und desinfizieren. Der Flotatschlamm wird an der Oberfläche des Filters abgeschabt.

Bei dem in der US 4 156 648 A beschriebenen Verfahren werden Rohwässer wie Brackwasser, Grundwasser oder Abwasser aus Wäschereienn, Duschen und Küchen behandelt. In der US 4 156 648 A ist kein Hinweis darauf enthalten, die beim Innenreinigen von Straßentank- und Straßensilofahrzeugen, Eisenbahnkesselwaggons und Tankschiffen anfallenden Flüssigkeiten von einzelnen Waschplätzen gemeinsam zu behandeln.

Die US 4 211 652 A betrifft ein Verfahren, bei welchem das Abwasser aus Wäschereien in einem Rohwassertank gesammelt wird. Luft und Verfahrenschemikalien gelangen in das System in diesem Tank. Aus diesem Tank wird das Abwasser durch eine Flotationszelle geleitet, wo die Feststoffe durch Flockulation und Belüftung als Flotatschlamm entfernt werden. Zur Entfernung weiterer Feststoffe ist ein Filter nachgeschaltet. Das filtrierte Wasser wird in einem Filtratwasserspeicher zur Wiederverwendung eingeleitet. Ein Wärmetauscher hält das Reinwasser auf der erforderlichen Temperatur. Das Überschußwasser, welches in die Schmutzwasserkanalisation abgeleitet wird, kann verschiedene Reinheitsgrade aufweisen. Bei dem in der US 4 211 652 A beschriebenen Verfahren wird als Flockuliermittel ein kurzkettiges, kationisches Polymer eingesetzt.

Die US 4 211 652 A beschreibt somit ein Verfahren zur Behandlung von Wäschereiabwässern und Wiederverwendung des gereinigten Abwassers. In der US 4 211 652 A ist kein Hinweis darauf enthalten, die beim Innenreinigen von Straßentank- und Straßensilofahrzeugen, Eisenbahnkesselwaggons und Tankschiffen anfallenden Flüssigkeiten von einzelnen Waschplätzen zu vereinigen und dann zu behandeln.

Die US 4 377 485 A betrifft eine Vorrichtung zum Entfernen suspendierter Partikel aus Wasser in einem Rundbehälter mit einer Verteil- und Flockulationskammer, die in den Tank eingetaucht ist und durch eine Tragvorrichtung kreisförmig im Tank geführt wird. Flockungsmittel und Zuflußwasser werden in den Körper der sich bewegenden Flockungskammer zugeführt und gereinigtes Wasser durch einen Filter am Behälterboden abgeleitet. Ein Großteil der Partikel wird durch Flockung koaguliert und steigt zur Oberfläche durch die Wirkung der Luftblasen auf. Der Schwimmschlamm wird mit einem Spiralschöpfer entfernt. Einzelne Teile des Filters werden selektiv rückgespült, während die übrigen Filterteile in Betrieb stehen.

Die US 4 377 485 A beschreibt somit eine bekannte Vorrichtung zur Trinkwasseraufbereitung mittels Flotation und Filtration in einem gemeinsamen Behälter. In der US 4 377 485 A ist kein Hinweis darauf enthalten, die beim Innenreinigen von Straßentank- und Straßenisolierfahrzeugen, Eisenbahnkesselwaggons und Tankschiffen anfallenden Flüssigkeiten von einzelnen Waschplätzen gemeinsam zu behandeln.

Die EP 0 315 584 A1 betrifft ein Verfahren zur Behandlung von Abwässern mit sauren Dekontaminiersubstanzen. Das Verfahren dient zur Reinigung von Abwässern von Säurekontaminierstoffen und enthält die Schritte Neutralisation von Säuredekontaminierwirkstoffen mit Alkalien, wobei suspendierte Stoffe aus dem neutralisierten Abwasser mittels Filter entfernt werden. Inhibitoren werden durch Aktivkohleadsorption aus dem gefilterten Wasser entfernt, radioaktive Ionen durch aktivierte Kohle mit einem Chelatharz entfernt und das mit Chelatharz behandelte Abwasser durch Eindampfung konzentriert und das erhaltene Konzentrat bitumisiert.

Bei dem in der EP 0 315 584 A1 beschriebenen Verfahren werden Abwässer behandelt, welche durch eine Reinigungsflüssigkeit bei der Wäsche von Kernkraftwerkausstattungen radioaktiv kontaminiert sind. Das Abwasser enthält organische Säuren, Inhibitoren, LiOH und Radioaktivität.

In der EP 0 315 584 A1 ist kein Hinweis darauf enthalten, die beim Innenreinigen von Straßentank- und Straßensilofahrzeugen, Eisenbahnkesselwaggons und Tankschiffen anfallenden nicht radioaktiven Flüssigkeiten von einzelnen Waschplätzen gemeinsam zu behandeln.

Die US 4 160 724 A betrifft ein Verfahren zur Entfernung von Stickstoff und organischen Kohlenstoffverunreinigungen in einem einzigen Zweitankschlammsystem durch ein symbiotisches Zweistufenverfahren, wobei im zweiten Becken hauptsächlich Ammonium zu Nitrat oxidiert und im ersten Becken hauptsächlich Nitrat zu gasförmigem Stickstoff reduziert wird. Biologischer Schlamm befindet sich in beiden Becken, aber es treten unterschiedliche Reaktionen auf, da sich die gemischte Mikrobenpopulation in den Becken in unterschiedlichen Umweltbedingungen aufhalten. Die meisten Kohlenstoffverbindungen werden im ersten Becken abgebaut durch eine Kombination von biologischer Aufnahme und Zellenwachstum und Kohlenstoffnutzung als ein Elektronenakzeptor in der Atmungsdenitrifikation.

Bei dem in der US 4 160 724 A beschriebenen Verfahren wird in der ersten Reaktionszone unter hauptsächlich anoxischen Bedingungen Nitrat und/oder Nitritstickstoff in Stickstoffgas bei gleichzeitigem Verbrauch des kohlehaltigen Materials umgewandelt. In der zweiten Reaktionszone wird hauptsächlich unter aeroben Bedingungen durch Luftsauerstoffeintrag nitrogenes Material in Nitrat oxydativ umgewandelt. Die Rücklaufschlammrate aus der zweiten Reaktionszone in die erste Zone beträgt 200 bis 500% der Zulaufmenge, wobei die Belebtschlammkonzentration 3000 bis 7000 mg/l Trockensubstanz beträgt.

In der US 4 160 724 A ist auch der Vorschlag enthalten, Phosphorverbindungen durch die Zugabe von 180 bis 200 mg/l Aluminium aus dem Abwasser zu entfernen.

Die US 4 160 724 A beschreibt somit ein bekanntes Verfahren zur Entfernung von biologisch abbaubaren Kohlenstoff- und Stickstoffverbindungen aus vorwiegend häuslichen Abwässern.

Die EP 0 849 230 A1 betrifft ein zweistufiges, biologisches Verfahren zur Entfernung von Stickstoff aus Abwasser. Bei der EP 0 849 230 A1 werden Stickstoff und andere Nährsubstanzen aus dem Abwasser unter Verwendung von rezykliertem Aktivschlamm entfernt. Es wird eine Mischflüssigkeit von zufließendem Abwasser und rezykliertem Aktivschlamm gebildet, und danach in zwei aufeinanderfolgenden Stickstoffentfernungsschritten behandelt, wobei jede Stufe eine anoxe Denitrifikationszone und eine aerobe Nitrifikationszone hat. Die Mischflüssigkeit fließt anschließend in eine Nachklärung, wo Belebtschlamm aus dem Abwasser abgetrennt wird. Die Aufenthaltszeit des Belebtschlammes im Nachklärbecken ist ausreichend zur Adaption der Mikroorganismen für einen Nitrat/Nitritatmungspfad. Um eine hohe Konzentration an denitrifizierenden Mikroorganismen zu erreichen, wird ein Teil des Belebtschlammes aus dem Bachklärbecken direkt in die zweite Stickstoffeliminationsstufe rückgeführt.

In der EP 0 849 230 A1 sind Angaben über die Abwasser- und Schlammkreisläufe in den beiden Stufen sowie dem Nachklärbecken angegeben. Weiters wird die Aufenthaltszeit des Belebtschlammes im Nachklärbekken mit 30 min bis 4 Stunden, vorzugsweise 2 Stunden, angegeben.

Die EP 0 849 230 A1 beschreibt somit ein Verfahren zur Stickstoffeliminierung in vorwiegend häuslichen Abwässern. In der EP 0 849 230 A1 ist kein Hinweis darauf enthalten, die beim Innenreinigen von Straßentank- und Straßensilofahrzeugen, Eisenbahnkesselwaggons und Tankschiffen anfallenden Flüssigkeiten von einzelnen Waschplätzen gemeinsam zu behandeln.

Entgegen den bekannten Verfahren liegt der Erfindung die Aufgabe zugrunde, ein einfaches, jedoch technisch und ökologisch wirkungsvolles sowie ökonomisch vorteilhaftes Verfahren der eingangs genannten Gattung vorzuschlagen, bei welchem die gereinigten Abwässer die Direkteinleitungsgrenzwerte in einen Vorfluter erreichen.

Gelöst wird die Aufgabe erfindungsgemäß zunächst durch das in Patentanspruch 1 gekennzeichnete Verfahren.

Bevorzugte und vorteilhafte Ausgestaltungen des Verfahrens der Erfindung sind Gegenstand der Unteransprüche.

Ein Merkmal des erfindungsgemäßen Verfahrens besteht darin, daß alle zum Reinigen eingesetzten Flüssigkeiten, z.B. Waschwässer, die mit organischen und anorganischen Chemikalien, Mineralölprodukten und deren Derivaten sowie mit Lebensmittelrückständen, Granulaten und Stäuben verunreinigt sind, in einem gemeinsamen Homogenisierungsbecken (Tagesausgleichsbecken) gesammelt und danach kontinuierlich in einer zweistufigen biologischen Reinigung mittels an sich bekannten, jedoch spezifisch modifizierten Festbettverfahren behandelt werden. Ein Vorteil des erfindungsgemäßen Verfahrens besteht darin, daß bei dem Einsatzgebiet der Tankwäsche Ablaufwerte erzielt werden können, die den Direkteinleitergrenzwerten entsprechen und diese sogar beträchtlich unterschreiben können.

Die besonderen Vorteile des erfindungsgemäßen Verfahrens sind damit begründet, daß alle Reinigungsflüssigkeiten in einem Becken gesammelt und dadurch homogenisiert, neutralisiert und intensiv vermengt und in Tageschargen vergleichmäßigt werden. Dieses homogene Gemenge kann danach wesentlich einfacher in einer einzigen Verfahrenskette mit einer biologischen Hauptreinigungsstufe, welche Wirkungsgrade von 90 bis 98% bei der CSB-Elimination aufweist, gereinigt werden. Dadurch ergeben sich wesentliche technische sowie ökonomische und ökologische Vorteile gegenüber den bekannten physikalisch/chemischen Reinigungen von Tankwaschwässern, welche große Chemikalienmengen benötigen, die zusätzlich zu hohen Chemieschlammmengen als Restprodukte führen.

Der Erfindung liegt die Erkenntnis zugrunde, daß eine wesentlich leichtere Erfassung der einzelnen Ströme der Reinigungsflüssigkeiten möglich ist. Weiters werden die Reinigungsflüssigkeiten bei dem Verfahren und der Erfindung in einer mehrstufigen, mechanischen, biologischen und physikalisch-chemischen Reinigungskette bis zum Erreichen von Emissionsgrenzwerten für die Einleitung in eine öffentliche Kanalisation sowie für die Direkteinleitung in ein Fließgewässer (Vorfluter) gereinigt. Der Großteil der gereinigten Reinigungsflüssigkeiten kann rezykliert und dabei mit Nutzwasser, vorzugsweise Grundwasser vermischt werden. Die Recyclingrate kann 50% bis 90% betragen.

Erfindungsgemäß erfolgt die Tankreinigung bevorzugt durch eine vollautomatische Tankinnenreinigungsanlage, die als stationäre Hochdruckanlage mit Drücken von 10 - 900 bar am Sprühkopf ausgebildet sein kann. Auf einer Reinigungsbahn können bis zu vier Tankinnenreinigungsköpfe gleichzeitig betrieben werden, sodaß Mehrkammerfahrzeuge in einem Arbeitsgang gereinigt werden können.

Mit einer eingebauten Mikroprozessorsteuerung und einem integrierten Bildschirm können die Reinigungsprogramme des erfindungsgemäßen Verfahrens auch vollautomatisch durchgeführt werden. Die Programme umfassen im manuellen Betrieb oder Automatikbetrieb insbesondere die Reinigung mit Kaltwasser, Heißwasser, allfälligem Zusatz von Reinigungsmitteln (alkalisch oder sauer) und Dampf. Für die Produktgruppe azetonlösliche Acryl- und Kunstharze, Aromate und dergleichen, wird in einer Ausführungsform der Erfindung Azeton in einem separaten Azetonkreislauf verwendet.

Bei der Straßentankfahrzeug-, Kesselwaggon und Tankschiffreinigung von mineralölhaltigen Tankrestinhalten sowie Derivaten wird gemäß einem Vorschlag der Erfindung als Reinigungsmedium ein Wasser-Dampfgemisch mit einer Temperatur bis zu 100° C eingesetzt.

Bei Tank- und Silofahrzeugen sowie Kesselwaggons wird das Spülmedium bevorzugt vom Restinhalt des Tanks gewählt und besteht insbesondere aus Heiß- und Kaltwasser, Dampf, einem alkalischen Reiniger, und einem sauren Reiniger.

Der Druck beträgt hier im Mittel beispielsweise 50 bis 60 bar am Sprühkopf.

Weiters kann für bestimmte Produkte eine Höchstdruckanlage mit bis 900 bar am Sprühkopf eingesetzt werden.

In der Waschhalle können die Reinigungsflüssigkeiten in Rinnen gesammelt und nach Produktgruppen in flüssigkeitsdichten und produktbeständigen Kanälen abgeleitet werden. Je nach Produktgruppe werden erfindungsgemäß die zugehörigen pneumatischen Ventile geöffnet und der Reinigungsflüssigkeiten der Waschwässer erfolgt in die einzelnen Kanalstränge.

In der Regel wird bei dem Verfahren und der Erfindung von acht Produktgruppen ausgegangen, und zwar beispielsweise Granulate/Stäube, Säuren/Basen, Leime, Weichmacher und Waschmittelrohstoffe, wasserlösliche Farben, Phenolharze und Acrylharze, Lebensmittel, Lebensmittelfette, Melasse, Mineralöle und Additive, Latex und Dispersionen, azetonlösliche Acryl- und Kunstharze, Aromate, Phenole und deren Derivate sowie Sonderprodukte.

Die Anzahl der Produktgruppen kann jedoch erfindungsgemäß nach unten und nach oben variieren und der Reinigungsaufgabe angepaßt gewählt werden. Nach einer Vorbehandlung durch den Einsatz von Sieben, Fettabscheidern und Mineralölabscheidern, sowie Mischeinrichtungen können in einer Ausführungsform der Erfindung sämtliche Reinigungsflüssigkeiten in einem Homogenisierungssbecken gesammelt werden. Lediglich die Produktgruppe azetonlösliche Acryl- und Kunstharze sowie Aromate und dergleichen wird in diesem Fall über ein separates Kreislaufsystem auf Azetonbasis gereinigt und entsorgt. Dieses Kreislaufsystem ist vollkommen unabhängig von den bereits beschriebenen Abwasserteilströmen und deshalb auch nicht in das Abwasserreinigungssystem eingebunden.

In zur Innenreinigung gelangenden Kesselwaggons und Tankschiffen sowie zum Teil auch bei Straßentankfahrzeugen werden Mineralölprodukte behandelt. Die Reinigungsflüssigkeiten von Mineralölderivaten wie Heizöl leicht, Gasöl, Diesel und dergleichen werden in einer Ausführungsform der Erfindung über einen Mineralölabscheider geführt und gelangen danach direkt in die Recyclinganlage zur Wiederverwendung. Reinigungsflüssigkeiten von Heizöl mittel, Heizöl schwer, Rohölen und dergleichen, nach dem Passieren des Mineralölabscheiders in das Homogenisierungsbecken geleitet werden können.

Im Homogenisierungsbecken findet in einer Ausführungsform des erfindungsgemäßen Verfahrens ein quantitativer und qualitativer Ausgleich der in Menge und Zusammensetzung schwankenden Teilströme der Reinigungsflüssigkeiten statt. Gleichzeitig dient dieses Becken als Vorlage für eine gleichmäßige Beschickung der nachgeschalteten Behandlungsstufen. Die Verweilzeit der Reinigungsflüssigkeiten im Homogenisierungsbecken beträgt beispielsweise 0,5 bis 2 Tage, vorzugsweise 1 Tag. Die gemischte Reinigungsflüssigkeit kann danach kontinuierlich in eine Koagulationsstufe und Neutralisationsstufe gefördert werden.

Durch eine erfindungsgemäß bevorzugte und mengenproportionale Zugabe von Chemikalien wie Eisen-(III)-Chlorid (FeCl₃) entstehen bei der Koagulation Mikroflocken. Gleichzeitig kann Natronlauge (NaOH) bzw. Schwefelsäure (H₂SO₄) pH-Wert-geregelt zudosiert werden. In einer allenfalls ausgeführten, nachfolgenden Flockung werden mengenproportional Flockungshilfsmittel zugesetzt, um gut abtrennbare Makroflokken zu erzielen, welche danach in der Flotationsanlage abgeschieden werden können. Als Flotationsverfahren wird vorzugsweise eine Druck-Entspannungsflotation eingesetzt. Bei diesem Verfahren wird ein Teilstrom der bereits gereinigten Reinigungsflüssigkeit unter Druck mit Preßluft gesättigt. Dieser Teilstrom wird über ein spezielles Injektorsystem entspannt und gleichzeitig in das Gemisch aus Reinigungsflüssigkeit und Makroflocken eingetragen. Die durch die Drukkentspannung erzeugten Luftbläschen lagern sich an die Makroflocken an und bewirken deren Aufschwimmen als Flotat. Dabei wird der Flotatschlamm an der Oberfläche abgezogen und dem Flotatbecken zugeleitet, von wo er einer Presse zugeführt und in dieser entwässert werden kann.

Zur Verringerung der organischen Belastung der Reinigungsflüssigkeit wird in einer Ausführungsform der Erfindung eine biologische Reinigung durchgeführt. Die homogenisierten und neutralisierten Reinigungsflüssigkeiten weisen einen hohen CSB-Wert (chemischer Sauerstoffbedarf) von 1.000 bis 15.000 mg O₂/l auf. Das Verhältnis von BSB₅ (biochemischer Sauerstoffbedarf in 5 Tagen) zu CSB beträgt beispielsweise 1:3 bis 1:9, was auf erschwerte Abbaubedingungen schließen läßt. Aus diesem Grunde sind herkömmliche biologische Reinigungsverfahren wie sie bei der Behandlung von kommunalen Abwässern eingesetzt werden, bei Waschwässern der Innentankreinigung nicht geeignet. Erfindungsgemäß wird beispielsweise und bevorzugt ein an sich bekanntes aerobes 2-stufiges biologisches Abwasserreinigungsverfahren zum Abbau von Kohlenstoff- und Stickstoffverbindungen eingesetzt.

Erfindungsgemäß kann mit Vorteil ein zweistufiges biologisches Biofilmverfahren, vorzugsweise als Festbettverfahren eingesetzt werden. Aus dem Homogenisierungsbecken werden die Reinigungsflüssigkeiten kontinuierlich entnommen und in den Vorlagetank der Vorklärung, vorzugsweise ausgeführt als Lamellenseparator, gepumpt. Der abgesetzte Vorklärschlamm wird dem Schlammstabilisierungs- und Eindickbehälter zugeführt.

In der ersten biologischen Stufe ist im Biofilmreaktor ein flächiges, bodennahes Belüftungssystem installiert, das mittels eines oberirdischen Verdichters mit Luft gespeist wird. Die bedarfsgerechte Belüftung wird über eine Gelöstsauerstoff-Messung eingestellt, wobei der Sauerstoffgehalt 2 bis 7 mg/l, vorzugsweise 4 mg/l beträgt. Dem Behandlungsbecken wird ein Bewuchsmaterial als lose Schüttung zugesetzt, auf dem eine rasche Ausbildung der Biofilme stattfindet. Das Trägermaterial wird durch die Belüftung in Schwebe gehalten und ermöglicht einen intensiven Stoffaustausch mit den Reinigungsflüssigkeiten. Durch das nicht rückgespülte Biofilmsystem stellt sich an der Oberfläche des Trägermaterials ein Gleichgewicht zwischen Bakterien-, Proto- und Metazonen ein. Die Schichtdicke der Biozönose steht dabei im Gleichgewicht durch den Abrieb in Folge Scherkräften und kann Rasendicken von über 1 cm erreichen. Durch die hohe Rasendicke entstehen an der Oberfläche des Trägermaterials anoxische und anaerobe Zonen, so daß es hier zu einer Denitrifikation (Stickstoffabbau) kommt, wobei die Stickstoffgasblasen den Biofilm durch in der Regel 1 bis 2 mm große Öffnungen verlassen. Weiters ist der Schlammanfall beim nicht rückspielbaren Biofilmverfahren geringer als beim Belebungsverfahren und nicht rückgespülten Systemen.

Im oberen Teil des Belebungsbeckens befindet sich eine Lochplatte, welche das Ausschwemmen des Festbettes und somit der Biomasse verhindert. Die obere Lochplatte befindet sich knapp unterhalb des Wasserspiegels, um das vorhandene Reaktorvolumen möglichst vollständig zu nutzen. Als Trägermaterial werden feinporige Würfel aus Polypropylen mit einer spezifischen Oberfläche von 100 bis 400 m²/m³, vorzugsweise 150 bis 200 m²/m³ verwendet. Das Volumen des Trägermaterials beträgt in der biologischen Stufe 0,1 bis 0,8 m³/m³, vorzugsweise 0,4 m³/m³ Reaktorvolumen. Die spezifische Flächenbelastung des Trägermaterials liegt bei 20 bis 80 g CSB/m²,d, vorzugsweise 40 g CSB/m²,d. Daraus ergibt sich auf das Festbettvolumen bezogen eine mittlere Raumbelastung von 8 kg CSB/m³,d.

Die Reinigungsflüssigkeit durchfließt den biologischen Reaktor jeweils von oben nach unten. Über ein Steigrohr gelangt die Reinigungsflüssigkeit nach der ersten biologischen Stufe in ein Zwischenklärbecken, vorzugsweise ausgebildet als Lamellenseparator, in dem Feststoffe durch Sedimentation abgetrennt werden.

In der ersten biologischen Stufe werden maßgeblich biologisch leicht abbaubare Stoffe biochemisch oxydiert und der Reinigungsflüssigkeit entzogen. Danach fließt die geklärte Reinigungsflüssigkeit im freien Gefälle in die zweite biologische Stufe, die gleich ausgebildet ist die die erste Stufe. Von dort wird die biologisch behandelte Reinigungsflüssigkeit in ein Nachklärbecken, vorzugsweise ausgebildet als Lamellenseparator geleitet. In der zweiten Stufe werden vorwiegend biologisch schwer abbaubare Stoffe eliminiert.

Der abgesetzte Schlamm des Zwischen- und Nachklärbeckens besteht hauptsächlich aus Mikroorganismen und wird den biologischen Reaktoren als Rücklaufschlamm kontinuierlich zugeführt. Dadurch kann die Biomasse und somit auch die damit verbundene Abbauleistung nahezu konstant gehalten werden. Der Überschußschlamm wird in das Vorklärbecken geführt und von dort gemeinsam mit dem Vorklärschlamm in die Schlammstabilisierung und -eindickung geleitet. Die hydraulische Verweilzeit in der ersten und zweiten Stufe beträgt je 12 bis 24 Stunden, vorzugsweise 16 Stunden. Das Schlammalter beträgt 25 bis 50 Tage, vorzugsweise 30 Tage.

Nach der biologischen Behandlung liegt der CSB-Gehalt bei 200 bis 500 mg O₂/l. Die biologisch gereinigte Reinigungsflüssigkeit wird der Nachbehandlung zugeführt. Diese besteht aus einer Filtration und Adsorption mittels Aktivkohle. Die Filtration wird entweder als Mehrschichtfiltration oder Gewebefiltration oder keramische Filtration durchgeführt.

Bei dem 2-stufigen Verfahren werden neben den in den Reinigungsflüssigkeiten gelösten organischen Kohlenstoffverbindungen auch Ammonium und Nitrat biologisch abgebaut. In der Stufe-Biologie I (Denitrifikation) erfolgt die Umsetzung des aus Ammonium in der Stufe-Biologie II (Nitrifikation) gebildeten Nitrates zu molekularem Stickstoff. Hierzu ist die Rückführung eines Stromes von Reinigungsflüssigkeit aus der Stufe-Biologie II in die Stufe-Biologie I erforderlich. Die Rückführung dieses Teilstromes erfolgt bevorzugt über den, aus der für die Biomasseabtrennung eingesetzten Ultrafiltration, anfallenden Rücklaufschlamm. Das in der Nitrifikation gebildete Nitrat dient in der Denitrifikation als Sauerstoffquelle für den biologischen Abbau der organischen Stickstoffverbindungen. Somit ist in dieser Stufe keine Belüftung erforderlich.

Zur Durchmischung des Beckeninhaltes sind bevorzugt Rührwerke eingebaut. Die Nährstoffversorgung wird in der Regel durch die dosierte Zugabe von Phosphorsäure sichergestellt. Auch andere Nährstoffe und biologische Hilfsmittel zum beschleunigten Abbau können eingesetzt werden. Im freien Überlauf fließt die Reinigungsflüssigkeit in die Nitrifikation. In dieser wird neben der Umsetzung von Ammonium zu Nitrat auch organischer Kohlenstoff durch aeroben biologischen Abbau eliminiert. Der dazu erforderliche Sauerstoff wird beispielsweise mit Druckluft über Kunststoff-Membranbelüfter oder ähnliche Belüftungsaggregate eingetragen. Das Verhältnis der Volumina der Stufe-Biologie I (V_{D} = Volumen der Denitrifikation) zur Stufe-Biologie II (V_{BB} = Volumen der Nitrifikation) beträgt bevorzugt 0,2 bis 0,4.

Die Abtrennung des Belebtschlammes erfolgt vorzugsweise in einer nachgeschalteten Ultrafiltration. Diese hat eine mit Nachklärbecken bei einer konventionellen Biologie vergleichbare Funktion. Während das Permeat als Klarablauf den nachgeschalteten Verfahrensstufen zur Weiterbehandlung zugeführt wird, kann die im Konzentrat zurückgehaltene Biomasse praktisch vollständig in die beiden biologischen Reinigungsstufen zurückgeführt werden. Die Verteilung des Rücklaufschlammes zur Stufe-Biologie I und StufeBiologie II erfolgt über eine Ventilsteuerung. Das Rückführverhältnis (Rücklauf im Verhältnis zum Zulauf) beträgt bevorzugt 1,0 bis 5,0, vorzugsweise 3,0. Der Überschußschlammabzug in die Schlammstabilisierung erfolgt beispielsweise ebenfalls über ein automatisch ansteuerbares Ventil.

Erfindungsgemäß können auch Membranverfahren, vorzugsweise Ultrafiltration, eingesetzt werden. Durch den Einsatz einer Ultrafiltration zur Biomasseabtrennung werden erfindungsgemäß auch Vorteile gegenüber einer konventionellen Nachklärung erreicht. Zunächst wird der Schlammabtrieb und somit eine Verschlechterung der Reinigungsleistung verhindert. Weiters kann die Belebtschlammkonzentration in der Biologie auf das drei- bis vierfache im Vergleich mit herkömmlichen Nachklärbecken erhöht werden. Die dadurch reduzierte Schlammbelastung auf 0,02 bis 0,1 g BSB₅/kg TS,d, vorzugsweise 0,05 bewirkt eine effektivere Nutzung des vorhandenen Beckenvolumens, was letztendlich eine Erhöhung der Betriebssicherheit zur Folge hat. Weiters steigt durch die geringe Schlammbelastung das Schlammalter beispielsweise auf 30 bis 80 Tage, vorzugsweise 50 Tage, so daß der biologische Überschußschlamm bereits simultan stabilisiert wird. Die Überschußschlammproduktion beträgt beispielsweise 0,15 bis 0,30 kg TS/kg CSB-Abbau. Der Glühverlust des Klärschlammes liegt unter 40 bis 50%.

Die Membranfiltration arbeitet bevorzugt im Membranbereich von 0,01 bis 1,0 µum, vorzugsweise als Ultrafiltration mit 0,04 bis 0,05 µm und trennt somit alle Feststoffe inklusive Bakterien und teilweise auch Viren ab. Das Permeat wird beispielsweise in das Mischbecken zur weiteren Nutzung als Recyclingwasser geleitet. Durch den hohen Reinigungsgrad beträgt die Recyclingrate 50 bis 90%, in der Regel 80%. Somit kann Frischwasser im gleichen Ausmaße eingespart werden. Weiters wird damit die Abwasserfracht in die öffentliche Kanalisation oder ein Fließgewässer entlastet.

Anstelle des zweistufigen biologischen Reinigungsverfahrens, das als Belebtschlammsystem betrieben wird, kann auch ein biologisches Biofilmverfahren eingesetzt werden. Dabei wird in einem permanent getauchten Festbett ein Trägermaterial durch Lufteintrag am Beckenboden in Schwebe gehalten. Das Trägermaterial (beispielsweise Kunststoffhohlkörper) reibt aneinander, sodaß sich an der äußeren Oberfläche keine Bakterienbesiedelung bildet. Sessile Mikroorganismen setzen sich im inneren des Trägermateriales an und bewirken dort den biochemischen Abbau von Kohlenstoff- und Stickstoffverbindungen. Durch die lange Aufenthaltsdauer des aktiviertes Bioschlammes im Biofilmreaktor (Festbett) wird ein hohes Schlammalter von 20 bis 40 Tagen erreicht. Es kommt zu einer weitgehenden Mineralisierung, sodaß der Glühverlust des Klärschlammes insbesondere unter 40 bis 50% liegt. Die Überschußschlammproduktion beträgt hierbei beispielsweise 0,15 bis 0,30 kg TS/kg CSB-Abbau.

Weiters kann die biologische Reinigung auch nach dem Reinsauerstoffverfahren oder Tropfkörperverfahren eingesetzt werden.

In der in einer Ausführungsform der Erfindung folgenden Aktivkohleadsorption werden biologisch nicht abbaubare, organische Inhaltsstoffe der Reinigungsflüssigkeiten sowie auch allenfalls verbliebene anorganische Schadstoffe eliminiert. Vorzugsweise werden zwei Aktivkohleadsorber in Serie geschaltet. Die Adsorber sind beispielsweise so bemessen, daß der erforderliche Ablaufwert für TOC (gesamter, organisch gebundener Kohlenstoff) bzw. CSB (chemischer Sauerstoffbedarf) bereits nach dem zuerst durchströmten Adsorber erreicht wird. Der nachgeschaltete Adsorber fungiert als Sicherheitsstufe bis zum Erreichen der Beladungskapazität in der vorgeschaltenen Einheit. Die hydraulische Verweilzeit in jedem Aktivkohleadsorber beträgt bevorzugt 0,5 - 1,5 h. Durch systematische Analysen kann der Zeitpunkt des Durchbruches überwacht werden. Wenn dieser erreicht ist, wird der beladene Adsorber aus dem System geschaltet und die Aktivkohle ersetzt. Während dieser Zeit gewährleistet der praktisch unbeladene zweite Adsorber das Erreichen der geforderten Reinwasserqualität für Direkteinleitung in den Vorfluter. Nach dem Aktivkohlewechsel wird der neubefüllte Adsorber dem in Betrieb befindlichen Aktivkohlefilter nachgeschaltet.

Erfindungsgemäß kann auch ein an sich bekannter Aktivkohlefilter bzw. mehrere Filter in Serie oder parallel geschaltet werden. Dem Aktivkohlefilter kann auch ein mechanischer Filter wie beispielhaft ein Gewebefilter oder Mehrschichtfilter zwecks Abscheidung von Schwebstoffen vorgeschaltet werden.

Das Klarwasser aus dem Aktivkohlefilter gelangt in einer Ausführungsform der Erfindung in das Qualitätsbecken. Hier werden kontinuierlich chemische Parameter wie pH-Wert, Temperatur, Trübung und dgl. überwacht. Im Überlauf fließt gereinigte Reinigungsflüssigkeit über eine Mengenmessung in die Freispiegelleitung zur Direkteinleitung in den Vorfluter oder die städtische Kanalisation, soferne eine solche vorhanden ist. Die gereinigte Reinigungsflüssigkeit, beispielsweise Wasser, kann bei der Erfindung jedoch wahlweise auch als Recyclingwasser im Kreislauf geführt werden, sodaß die Recyclingrate über 90% liegt.

Der Überschußschlamm aus der biologischen Reinigung kann in der Schlammstabilisierung aerob stabilisiert werden. Beispielsweise gelangt der Überschußschlamm aus dem Schlammeindicker und Stabilisierungsbecken in den Schlammstapel. Durch das hohe Schlammalter im System ist die Überschußschlammproduktion gering und beträgt 0,1 bis 0,3 g TS / g CSB - Abbau, vorzugsweise 0,15 TS/g CSB-Abbau. Danach gelangt es in den Schlammstapel und in die Eindickung. Sowohl die Entwässerung des Flotats aus dem Flotatbecken als auch die des stabilisierten Überschußschlamms erfolgt bevorzugt in einer Schlammpresse, vorzugsweise ausgebildet als Kammerfilterpresse mit Flokkungshilfsmitteldosierung. Die Schlämme können anschließend ordnungsgemäß entsorgt werden.

Das Verfahren der Erfindung wird nachstehend an zwei in der Zeichnung schematisch dargestellten Ausführungsbeispielen näher erläutert.

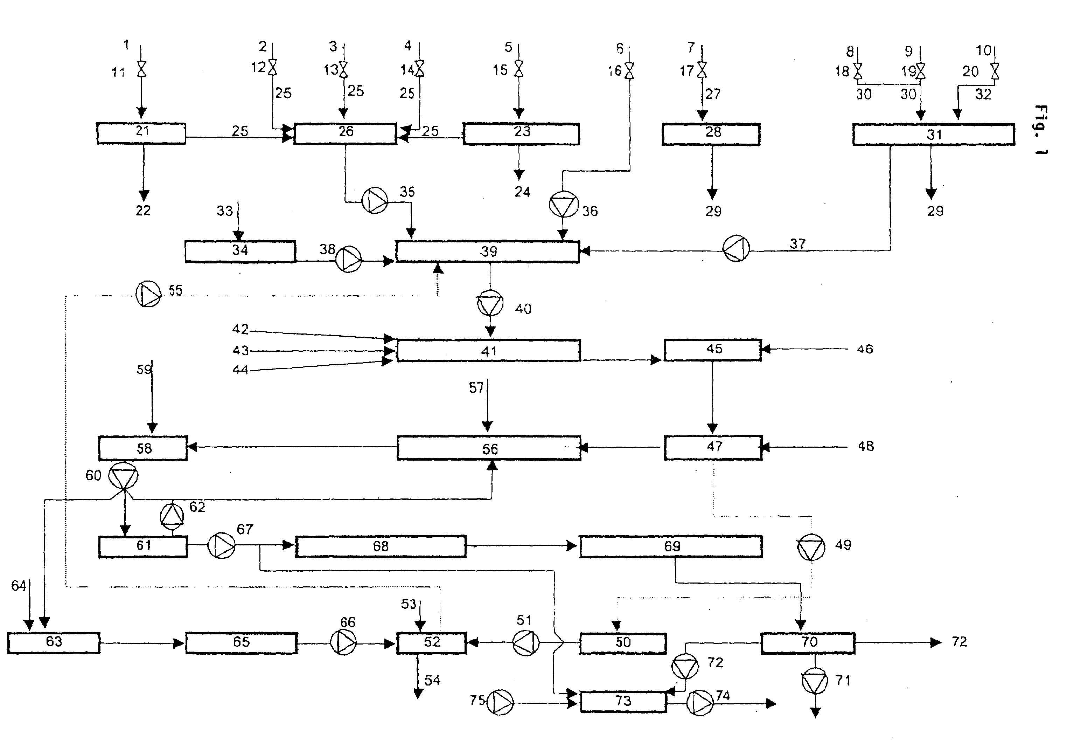

In Fig. 1 ist als Beispiel eine Anlage zur Reinigung der Waschwässer aus Straßentank-, Straßensilofahrzeugen, Kesselwaggons, und Tankschiffen mit Flotation dargestellt.

Fig. 2 zeigt beispielhaft eine Anlage zur Reinigung der Waschwässer aus Straßentank-, Straßensilofahrzeugen, Kesselwaggons und Tankschiffen ohne Flotation.

Die Straßentank- und Silofahrzeuge sind mit verschiedenen Produktgruppen (im Beispiel acht Gruppen) zugeordneten Verbindungselementen für Granulate und Stäube 1, Säuren und Laugen 2, Waschmittel 3, Farben 4, Lebensmittel 5, Latex 6, Harze 7 und Mineralölflüssigkeiten 8 verbunden. Die Verbindungselemente 1 - 8 werden je nach Produktgruppe mittels pneumatischer Ventile 11 - 18 entsprechend den einzelnen Waschvorgängen abgesperrt oder geöffnet. Die Waschwässer der Produktgruppe 1 werden zunächst über ein Sieb 21 geführt, wobei die Granulatrückstände 22 ausgeschieden und zur Wiederverwertung verbracht werden.

Die Waschwässer der Produktgruppe 5 gelangen in einen Fettabscheider 23, aus dem das Fett 24 entsorgt wird.

Nach dem Sieb 21 und dem Fettabscheider 23 werden die Waschwässer in einem gemeinsamen Kanalstrang 25 mit den Abwässern der Produktgruppen 2, 3 und 4 in das Mischbecken 26 geleitet.

Die Harze der Produktgruppe 7 werden durch Azeton gereinigt. Die Ableitung der Reinigungslösung erfolgt in einem geschlossenen Pendelsystem 27 in einen Azetontank 28, wobei die verbrauchte Azetonlösung der Entsorgung 29 zugeführt wird.

Die Waschwässer der Produktgruppe 8 aus Tankfahrzeugen sowie der Produktgruppe 9 aus Kesselwaggons gelangen über einen gemeinsamen Freispiegelkanal 30 in einen Mineralölabscheider 31.

Die Waschwässer der Produktgruppe 10 Mineralöle aus den Tankschiffen werden über eine Druckleitung 32 zum Mineralölabscheider 31 gepumpt.

Für unvorhergesehene Vorkommnisse kann über eine Ableitung 33 ein Reservebecken 34 beschickt werden.

Die Abwässer aus dem Mischbecken 26 werden über ein Pumpwerk 35 in ein Homogenisierungsbecken 39 gepumpt. Die Waschwässer der Produktgruppe 6 gelangen über ein Pumpwerk 36 in das Homogenisierungsbecken 39. Die mineralölhältigen Abwässer werden vom Mineralölabscheider 31 über ein Pumpwerk 37 in das Homogenisierungsbecken 39 geleitet. Aus einem Reservebecken 34 wird über ein Pumpwerk 38 das Homogenisierungsbecken 39 beschickt.

Vom Homogenisierungsbecken 39 wird kontinuierlich eine einstellbare Abwassermenge von einem Pumpwerk 40 zur Koagulation und Neutralisation 41 gepumpt. Dem Koagulations- und Neutralisationsreaktor 41 werden je nach Bedarf die Chemikalien Natronlauge 42, Eisenchlorid 43 und Schwefelsäure 44 zugesetzt. Im Freigefälle fließt Abwasser aus dem Reaktor 41 zu einem Flockulationsreaktor 45, wo es zur Flockung der Mikroflocken zu Makroflocken kommt. Dem Flockungsreaktor werden Flockungshilfsmittel 46 zugesetzt. Danach fließt das Abwasser zur Flotation 47. Zur effektiven und vollständigen Abtrennung der Schlammflocken wird Luft 48 in dispergierter Form zugesetzt. Eine Dünnschlammpumpstation 49 fördert das Flotat in ein Flotatbecken 50. Aus dem Flotatbecken 50 wird nach Bedarf über ein Flotatpumpwerk 51 die Filterpresse 52 beschickt. Während des Filtrationsvorganges werden Flockungshilfsmittel 53 zugesetzt. Der Filterkuchen 54 wird entsorgt. Das Filtratwasser gelangt über ein Pumpwerk 55 in das Homogenisierungsbecken 39.

Aus dem Flotation fließt das Abwasser im Freigefälle zur biologischen Reinigung in die Stufe-Biologie I 56 zur Denitrifikation. Zwecks Einstellung eines ausgeglichenen Nährstoffverhältnisses wird Phosphorsäure 57 zudosiert. Aus der Stufe-Biologie I 56 fließt das Abwasser in die Stufe-Biologie II 58 zur Nitrifikation. Zur Aufrechterhaltung der Biologie wird Luftsauerstoff über Belüfter, vorzugsweise Tiefenbelüfter 59, eingetragen.

Über Schlammwasserpumpen 60 wird das Abwasser-Belebtschlamm-Gemisch von der Nitrifikation zu einer Ultrafiltrationsanlage 61 gefördert. Eine Rücklauf schlammpumpe 62 dient zur Förderung des Rücklauf Schlammes in die Denitrifikation Stufe-Biologie I, 56 sowie wahlweise Überschußschlamm in ein Schlammstabilisierungsbecken 63. Im Schlammstabilisierungsbecken 63 ist ein Umwälzbelüfter zur intermittierenden Belüftung 64 installiert. Aus der Schlammstabilisierung 63 wird Überschußschlamm im Freigefälle in einen Schlammstapel 65 geleitet, von wo er über eine Schlammpumpe 66 zur Filterpresse 52 geführt wird. Der Filterkuchen 54 wird entsorgt und das Filtratwasser über das Pumpwerk 55 in das Homogenisierungsbecken 39 zurückgeführt.

Ein Filtratpumpwerk 67 beschickt ein Aktivkohlefilter I 68 und danach ein Aktivkohlefilter II 69. Die Aktivkohlefilter 68, 69 sind in Serie geschaltet. Bei der Erschöpfung eines Filters erfolgt die Umschaltung der Behälteranordnung in Hauptfließrichtung (Pendelbetrieb). Im Freigefälle gelangt gereinigtes Abwasser in ein Qualitätsbecken 70, wo eine kontinuierliche Probenahme 71 zwecks Überprüfung der Ablaufqualität erfolgt. Bei entsprechender Qualität wird Abwasser in die Kanalisation bzw. den Vorfluter 72 abgeleitet. Bei nicht entsprechender Qualität kann Abwasser entweder in ein Mischbecken 73 und von dort über eine Pumpe 74 als Recyclingwasser wieder verwendet werden, oder es wird zur neuerlichen Reinigung in das Homogenisierungsbecken 39 rückgeführt. In das Recyclingbecken 73 wird über ein Brunnenwasserpumpwerk 75 auch Nutzwasser geführt.

Bei dem angeführten und dargestellten Ausführungsbeispiel des erfindungsgemäßen Verfahrens werden folgende Reinigungsleistungen erzielt.

Ausgewählte Parameter des gereinigten Abwassers:
pH-Wert = 6,5 - 8,5,
abfiltrierbare Stoffe = 30 mg/l, absetzbare Stoffe = 0,3 ml/l,
BSB₅ = 20 mg/l,
CSB = 75 mg/l,
Ammoniumstickstoff (NH₄-N) = 10 mg/l,
Nitritstickstoff (NO₂-N) = 1,0 mg/l,
Gesamt-P = 2 mg/l,
Gesamt-KW = 5 mg/l,
AOX = 0,5 mg/l,
Tenside = 1 mg/l,
TOC = 25 mg/l,
lipophile Stoffe = 20 mg/l,
Phenolindex = 0,1 mg/l,
BTX = 0,1 mg/l,
Toxizität < GF₂.

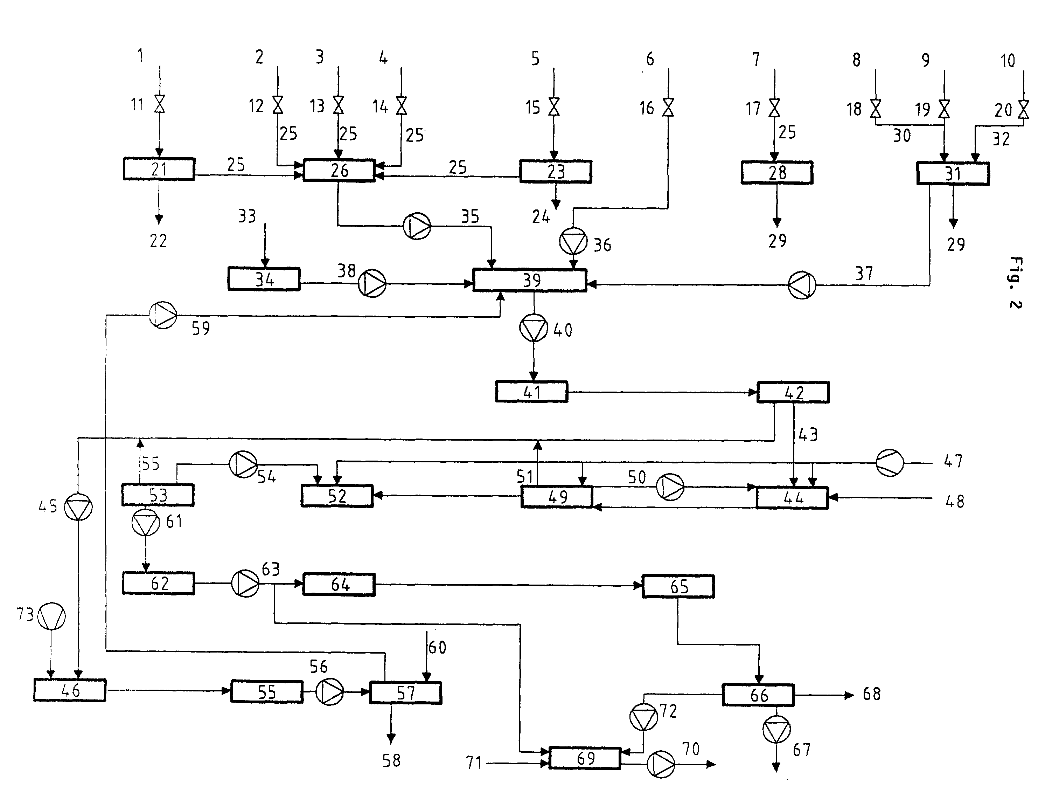

Die in Fig. 2 gezeigte Variante des erfindungsgemäßen Verfahrens (ohne Flotation) arbeitet wie folgt:

Die Straßentank- und Silofahrzeuge sind mit geeigneten Produktgruppen zugeordneten Verbindungselementen für Granulate und Stäube 1, Säuren und Laugen 2, Waschmittel 3, Farben 4, Lebensmittel 5, Latex 6, Harze 7 und Mineralölflüssigkeiten 8 verbunden. Die Verbindungselemente 1 bis 8 werden je nach Produktgruppe mittels pneumatischer Ventile 11 bis 18 entsprechend den einzelnen Waschvorgängen abgesperrt oder geöffnet. Die Waschwässer der Produktgruppe 1 werden zunächst über ein Sieb 21 geführt, wobei die Granulatrückstände 22 ausgeschieden und zur Wiederverwertung verbracht werden. Die Waschwässer der Produktgruppe 5 gelangen in den Fettabscheider 23, von wo das Fett 24 entsorgt wird. Nach dem Sieb 21 und dem Fettabscheider 23 werden die Waschwässer in einem gemeinsamen Kanalstrang 25 mit den Abwässern der Produktgruppen 2, 3 und 4 in das Mischbecken 26 geleitet.

Die Harze der Produktgruppe 7 werden durch Azeton gereinigt. Die Ableitung der Reinigungslösung erfolgt in einem geschlossenen Pendelsystem 27 in den Azetontank 28, wobei die verbrauchte Azetonlösung der Entsorgung 29 zugeführt wird.

Die Waschwässer der Produktgruppe 8 aus den Tankfahrzeugen sowie der Produktgruppe 9 aus Kesselwaggons gelangen über einen gemeinsamen Freispiegelkanal 30 in den Mineralölabscheider 31. Die Waschwässer der Produktgruppe 10 Mineralöle aus den Tankschiffen werden über eine Druckleitung 32 zum Mineralölabscheider 31 gepumpt.

Für unvorhergesehene Vorkommnisse wird über die Ableitung 33 ein Reservebecken 34 beschickt. Die Abwässer aus dem Mischbecken 26 werden über das Pumpwerk 35 in das Homogenisierungsbecken 39 gepumpt. Die Waschwässer der Produktgruppe 6 gelangen über das Pumpwerk 36 in das Homogenisierungsbecken 39. Die mineralölhältigen Abwässer werden vom Mineralölabscheider 31 über das Pumpwerk 37 in das Homogenisierungsbecken 39 geleitet. Aus dem Reservebecken 34 wird über das Pumpwerk 38 das Homogenisierungsbecken 39 beschickt. Vom Homogenisierungsbecken 39 wird kontinuierlich eine einstellbare Abwassermenge vom Pumpwerk 40 zum Vorlagebehälter 41 gepumpt. Von dort fließt das Abwasser in die Vorklärung 42 ausgebildet als Lamellenabscheider. Das Trübwasser 43 fließt im Freigefälle in den Biofilmreaktor 44 der Biologie I. Der abgesetzte Schlamm wird mittels Schlammpumpe 45 in den Eindicker 46 gepumpt. In den Biofilmreaktor wird Luftsauerstoff mittels Verdichter 47 eingebracht. Zwecks Einstellung eines ausgeglichenen Nährstoffverhältnisses kann Phosphorsäure 48 zudosiert werden. Aus dem Biofilmreaktor I 44 fließt das Abwasser-/Schlammgemisch in die Zwischenklärung 49. Der abgesetzte Schlamm wird mittels Rücklaufschlammpumpe 50 in die Biologie I zurückgeführt oder als Überschußschlamm 51 in den Eindicker 46 geführt. Das Trübwasser fließt in den Biofilmreaktor 52 der Biologie II, wo gleichfalls Luftsauerstoff 47 eingebracht wird. Das Schlamm/Wassergemisch fließt aus der Biologie II in die Nachklärung 53. Der abgesetzte Schlamm wird mittels Rücklaufschlammpumpe 54 in die Biologie II zurückgeführt oder als Überschußschlamm 55 in den Eindicker 46 geführt. Im Eindicker ist eine Belüftungseinrichtung samt Verdichter 73 installiert, damit intermittierend Luftsauerstoff zur Schlammstabilisierung eingebracht werden kann. Aus dem Eindicker mit Schlammstabilisierung 46 wird der Überschußschlamm im Freigefälle in den Schlammstapel 55 geleitet, von wo er über die Schlammpumpe 56 zur Filterpresse 57 geführt wird. Der Filterkuchen 58 wird entsorgt und das Filtratwasser über das Pumpwerk 59 in das Homogenisierungsbecken 39 zurückgeführt. Zur Unterstützung der Schlamm-/Wassertrennung werden Flockungsmittel 60 der Filterpresse 57 zugesetzt. Aus der Nachklärung 53 wird das Klarwasser über eine Pumpe 61 der Filtration 62 zugeführt. Das Filterpumpwerk 63 beschickt den Aktivkohlefilter I 64 und danach den Aktivkohlefilter II 65.

Im Freigefälle gelangt das gereinigte Abwasser in das Qualitätsbecken 66, wo eine kontinuierliche Probenahme 67 zwecks Überprüfung der Ablaufqualität erfolgt. Bei entsprechender Qualität wird das Abwasser in die Kanalisation bzw. den Vorfluter 68 abgeleitet. Bei nicht entsprechender Qualität kann das Abwasser entweder in das Mischbecken 69 und von dort über die Pumpe 70 als Recyclingwasser wieder verwendet werden, oder es wird zurück in das Homogenisierungsbecken 39 zur neuerlichen Reinigung rückgeführt. In das Misch- und Recyclingbecken 69 wird auch Nutzwasser 71 zugeführt.

Bei dem angeführten und dargestellten Ausführungsbeispiel des erfindungsgemäßen Verfahrens werden folgende Reinigungsleistungen erzielt.

Ausgewählte Parameter des Rohabwassers und gereinigten Abwassers:

| Parameter | Einheit | Rohabwasser | Gereinigtes Abwasser |
|---|---|---|---|
| pH-Wert abfiltrierbare | - | 6,5 - 8,5 | 6,5 - 8,5 |
| Stoffe | mg/l | 3.800 | 30 |
| absetzbare Stoffe | ml/l | 10 | 0,3 |
| BSB₅ | mg/l | 1.000 | 20 |
| CSB | mg/l | 5.000 | 75 |
| Ammoniumstickstoff (NH₄-N) | mg/l | 80 | 10 |
| Nitritstickstoff (NO₂-N) | mg/l | 4 | 1 |
| Gesamt-P | mg/l | 85 | 2 |
| Sulfat (SO₄) | mg/l | 300 | 300 |
| Gesamt-KW | mg/l | 1.000 | 5 |
| AOX | mg/l | 0,5 | 0,5 |

Beispielsweise ist das Verfahren der Erfindung ein Verfahren zum Reinigen und Aufbereiten von Flüssigkeiten, die bei der Innenreinigung von Straßentank- und Straßensilofahrzeugen, Eisenbahnkesselwaggons und Tankschiffen anfallen, und umfaßt das Erfassen der Waschflüssigkeiten am Ort des Anfalls nach Produktgruppen.

Die Waschflüssigkeiten werden nach Passieren von Vorreinigungseinrichtungen wie Sieben, Fettabscheidern, Mineralölabscheidern und Mischbehältern einem gemeinsamen Homogenisierungsbecken zugeführt, wobei die Verweilzeit im Homogenisierungsbecken vorzugsweise einen Tag beträgt.

Die Behandlung der Waschflüssigkeiten erfolgt kontinuierlich in einer Reinigungskette umfassend eine biologische Reinigung, Membranfiltration und Aktivkohleadsorption. Durch diese Behandlungskette werden die Waschwässer weitestgehend gereinigt, sodaß sie entweder in den Waschkreislauf zurückgeführt oder direkt in ein Fließgewässer (Vorfluter) eingeleitet werden können.

## Patentansprüche

1. Verfahren zum Reinigen und Aufbereiten von beim Innenreinigen von Straßentank- und Straßensilofahrzeugen, Eisenbahnkesselwaggons und Tankschiffen durch Flüssigkeiten an Waschplätzen anfallenden Reinigungsflüssigkeiten zu Recyclingzwecken oder zur Ableitung in eine Kanalisation oder Direkteinleitung in einen Vorfluter, dadurch gekennzeichnet, daß die an den Waschplätzen anfallenden Reinigungsflüssigkeiten (1 bis 8) der Produktgruppen zur Aufbereitung vereinigt werden, daß die vereinigten Reinigungsflüssigkeiten (1 bis 8) gemeinsam homogenisiert (39) werden, und daß die homogenisierten Reinigungsflüssigkeiten einer mehrstufigen, biologischen Aufbereitung zugeführt und in dieser gereinigt werden.

2. Verfahren nach Anspruch 1, dadurch gekennzeichnet, daß die homogenisierten Reinigungsflüssigkeiten der biologischen Aufbereitung kontinuierlich zugeführt werden.

3. Verfahren nach Anspruch 1 oder 2, dadurch gekennzeichnet, daß die homogenisierten Reinigungsflüssigkeiten einer chemisch-physikalischen und danach einer mehrstufigen biologischen Aufbereitung zugeführt werden.

4. Verfahren nach einem der Ansprüche 1 bis 3, dadurch gekennzeichnet, daß die homogenisierten Reinigungsflüssigkeiten zwecks biologischer Aufbereitung und Reinigung einer mehrstufigen biologischen Kläranlage mit Nachreinigung zugeführt werden.

5. Verfahren nach einem der Ansprüche 1 bis 4, dadurch gekennzeichnet, daß die Reinigungsflüssigkeiten in einem als Tagesausgleichsbecken dienenden Homogenisierungsbecken vereinigt werden.

6. Verfahren nach einem der Ansprüche 1 bis 5, dadurch gekennzeichnet, daß die vereinigten Reinigungsflüssigkeiten aus dem Homogenisierungsbecken (39) kontinuierlich einer aeroben biologischen Reinigung (42, 49) zugeführt werden.

7. Verfahren nach einem der Ansprüche 1 bis 6, dadurch gekennzeichnet, daß zur biologischen Aufbereitung und Reinigung das Verfahren der Filmbiologie, vorzugsweise als zweistufiges Festbettverfahren eingesetzt wird.

8. Verfahren nach einem der Ansprüche 1 bis 7, dadurch gekennzeichnet, daß zur Schlamm-/Wassertrennung Lamellenseparatorn (42, 49, 53) eingesetzt werden.

9. Verfahren nach einem der Ansprüche 1 bis 8, dadurch gekennzeichnet, daß zur Biomasseabtrennung eine Membranfiltration eingesetzt wird, um Feststoffe sowie Bakterien und teilweise auch Viren abgetrennt werden.

10. Verfahren nach einem der Ansprüche 1 bis 8, dadurch gekennzeichnet, daß zur Filtration Mehrschichtfilter, Gewebefilter, keramische Filter, etc. eingesetzt werden.

11. Verfahren nach einem der Ansprüche 1 bis 10, dadurch gekennzeichnet, daß die CSB-Elimination in der biologischen Reinigung über 90% beträgt.

12. Verfahren nach einem der Ansprüche 1 bis 10, dadurch gekennzeichnet, daß vor der direkten Einleitung des gereinigten Abwassers in einen Vorfluter ein Adsorptionsfilter, vorzugsweise Aktivkohlefilter, verwendet wird.

13. Verfahren nach einem der Ansprüche 1 bis 12, dadurch gekennzeichnet, daß die gereinigten Reinigungsflüssigkeiten mit einer Rate von bis zu 90% recycliert werden.

14. Verfahren nach einem der Ansprüche 1 bis 13, dadurch gekennzeichnet, daß zur biologischen Reinigung ein Belebtschlammverfahren eingesetzt wird.

15. Verfahren nach einem der Ansprüche 1 bis 14, dadurch gekennzeichnet, daß als Vorreinigung für die Reinigungsflüssigkeiten der Produktgruppe Granulate und Stäube (1), ein Siebvorgang (21), für die Reinigungsflüssigkeit der Produktgruppe Lebensmittel (5) eine Fettabscheidung (23) und für die Reinigungsflüssigkeit der Produktgruppe Mineralöle (8, 9 und 10) eine Mineralölabscheidung (31) ausgeführt wird, bevor diese Reinigungsflüssigkeiten mit Reinigungsflüssigkeiten anderer Produktgruppen vereinigt werden.

16. Verfahren nach einem der Ansprüche 1 bis 15, dadurch gekennzeichnet, daß die Reinigungsflüssigkeit der Produktgruppe Harze (7) über einen eigenen, getrennten Azetonkreislauf behandelt wird.

17. Verfahren nach einem der Ansprüche 1 bis 16, dadurch gekennzeichnet, daß die Reinigungsflüssigkeiten der Produktgruppen Granulate und Stäube (1), Säuren und Laugen (2), Waschmittel (3), Farben (4), Lebensmittel (5) miteinander vermengt (26) werden, bevor sie mit Reinigungsflüssigkeiten anderer Produktgruppen vereinigt werden.

18. Verfahren nach einem der Ansprüche 1 bis 17, dadurch gekennzeichnet, daß die vereinigten Reinigungsflüssigkeiten einer Koagulation und Neutralisation (41) unterzogen werden, indem Natronlauge (42), Eisenchlorid (43) und/oder Schwefelsäure (44) zugesetzt wird.

19. Verfahren nach Anspruch 18, dadurch gekennzeichnet, daß die Reinigungsflüssigkeiten anschließend an die Koagulation und Neutralisation zum Flocken (45) mit Flockungshilfsmittel (46) versetzt werden.

20. Verfahren nach Anspruch 19, dadurch gekennzeichnet, daß die Reinigungsflüssigkeiten nach dem Flocken (45) einer Flotation (47) unterzogen werden, indem Luft (48) in dispergierter Form zugesetzt wird.

21. Verfahren nach Anspruch 20, dadurch gekennzeichnet, daß das Flotat in ein Flotatbecken (50) geleitet wird und nach Bedarf in einer Filterpresse (52) entwässert wird.

22. Verfahren nach Anspruch 20 oder 21, dadurch gekennzeichnet, daß Reinigungsflüssigkeiten aus der Flotation (47) zur biologischen Reinigung in die Stufe-Biologie I (56) zur Denitrifikation geleitet werden, und daß Reinigungsflüssigkeiten aus der Stufe-Biologie I (56) in die Stufe-Biologie II (58) zur Nitrifikation geleitet werden.

23. Verfahren nach Anspruch 22, dadurch gekennzeichnet, daß zur Einstellung eines ausgeglichenen Nährstoffverhältnisses in der Stufe-Biologie I (56) Phosphorsäure (57) zudosiert wird.

24. Verfahren nach Anspruch 22 oder 23, dadurch gekennzeichnet, daß den Reinigungsflüssigkeiten in der Stufe-Biologie II (58) Luftsauerstoff (59) eingetragen wird.

25. Verfahren nach einem der Ansprüche 22 bis 24, dadurch gekennzeichnet, daß die Volumina der Stufe-Biologie I (56) und Stufe-Biologie II (58) ein Verhältnis von 0,2 bis 0,4 vorzugsweise 0,25 aufzuweisen.

26. Verfahren nach einem der Ansprüche 22 bis 25, dadurch gekennzeichnet, daß zur Biomasseabtrennung eine Membranfiltration (61), vorzugsweise ausgebildet als Ultrafiltration ausgeführt wird, wobei die Belebtschlammkonzentration in der Biologie auf 7 bis 15 g TS/m³, vorzugsweise 10 eingestellt wird.

27. Verfahren nach einem der Ansprüche 22 bis 25, dadurch gekennzeichnet, daß die Schlammbelastung (B_{TS}) 0,02 bis 0,1 g BSB₅/dg TS, d vorzugsweise 0,05, beträgt.

28. Verfahren nach einem der Ansprüche 22 bis 26, dadurch gekennzeichnet, daß das Schlammalter 20 bis 80 Tage, vorzugsweise 40 Tage beträgt.

29. Verfahren nach einem der Ansprüche 26 bis 28, dadurch gekennzeichnet, daß die Ultrafiltration (61) im Membranbereich von 0,01 bis 1,0 µm, vorzugsweise 0,04 µm arbeitet und Feststoffe, Bakterien und teilweise Viren abtrennt.

30. Verfahren nach einem der Ansprüche 1 bis 29, dadurch gekennzeichnet, daß die Recyclingrate an gereinigten Reinigungsflüssigkeiten 50 bis 90 %, vorzugsweise 80 % beträgt.

31. Verfahren nach einem der Ansprüche 1 bis 29, dadurch gekennzeichnet, daß die Reinigungsflüssigkeiten vor dem Einleiten in einen Vorfluter (72) über ein Aktivkohlefilter (67, 68) geleitet werden.

32. Verfahren nach Anspruch 31, dadurch gekennzeichnet, daß die Aufenthaltszeit im Aktivkohlefilter 0,5 bis 1,5 Stunden, vorzugsweise 1,0 Stunden beträgt.

33. Verfahren nach Anspruch 31 oder 32, dadurch gekennzeichnet, daß die nach dem Aktivkohlefilter (68, 69) gereinigte Reinigungsflüssigkeit dem Recycling zugeführt wird.

34. Verfahren nach einem der Ansprüche 22 bis 33, dadurch gekennzeichnet, daß der biologische Schlamm zwecks Entwässerung einer Filterpresse (52) zugeführt wird und das Filtrat-Wasser in das Homogenisierungsbecken (39) geführt wird.

35. Verfahren nach einem der Ansprüche 1 bis 34, dadurch gekennzeichnet, daß dem Recyclingbecken (73) Nutzwasser, insbesondere über ein Brunnenwasserpumpwerk (75), zugesetzt wird.

36. Verfahren nach einem der Ansprüche 22 bis 35, dadurch gekennzeichnet, daß zur biologischen Reinigung ein Aerobverfahren eingesetzt wird.

37. Verfahren nach einem der Ansprüche 22 bis 35, dadurch gekennzeichnet, daß zur biologischen Reinigung ein Anaerobverfahren eingesetzt wird.

38. Verfahren nach einem der Ansprüche 1 bis 36, dadurch gekennzeichnet, daß die Reinigungsflüssigkeiten unter Umgehung der Koagulation, Neutralisation (41) und Flotation (47) direkt der biologischen Reinigung zugeführt werden.
